# EUROPEAN PATENT APPLICATION

(11) **EP 4 650 492 A1**
(43) Date of publication of application: **19.11.2025**
(21) Application number: 24778813.6
(22) Date of filing: 16.02.2024
(51) Int. Cl.: C25B 15/08, C25B 1/042, C25B 9/00, C25B 15/023

(54) **ELECTROLYSIS SYSTEM AND CONTROL METHOD FOR ELECTROLYSIS SYSTEM**

(30) Priority: 31.03.2023 JP 2023059553
(71) Applicant: Mitsubishi Heavy Industries, Ltd., Tokyo 100-8332 (JP)
(72) Inventor: TAMURA, Ken, Tokyo 100-8332 (JP); KATO, Masayuki, Tokyo 100-8332 (JP); YOSHIMOTO, Toshizumi, Tokyo 100-8332 (JP)
(74) Representative: Hoffmann Eitle
(86) International application number: PCT/JP2024/005507
(87) International publication number: WO 2024/202668

(57) **Abstract**

Provided is an electrolysis system (100) including an electrolysis module (10); a water vapor supply system (40) that supplies water vapor to a hydrogen electrode; a hydrogen recovery system (50) that recovers hydrogen-enriched water vapor; an air supply system (20) that supplies air to an oxygen electrode; an oxygen recovery system (30) that recovers exhaust air; a hydrogen-enriched water vapor release system (60) that releases hydrogen-enriched water vapor from the hydrogen recovery system (50) into the atmosphere; an exhaust air release system (70) that releases exhaust air from the oxygen recovery system (30) into the atmosphere; a hydrogen-enriched water vapor discharge valve (63) disposed in the hydrogen-enriched water vapor discharge system (60); and an exhaust air discharge valve (73) disposed in the exhaust air discharge system (70), wherein the opening degrees of the hydrogen-enriched water vapor discharge valve (63) and the exhaust air discharge valve (73) are controlled to be adjustable when the electrolytic module (10) is stopped.

## Description

### Technical Field

The present disclosure relates to an electrolysis system and a control method for an electrolysis system.

### Background Art

An electrolysis module that produces hydrogen and oxygen by electrochemically decomposing water is a hydrogen production method which does not discharge carbon dioxide, and has excellent environmental characteristics. In the electrolysis module, in a solid oxide electrolysis module (solid oxide electrolysis cell: SOEC), ceramics such as yttria-stabilized zirconia are used as an electrolyte, and high-temperature water vapor is used as a raw material. Therefore, hydrogen can be more efficiently produced, compared to other electrolysis modules. In addition, co-electrolysis for directly producing carbon monoxide (CO) can be performed by using carbon dioxide (CO₂) as a raw material to achieve decarbonization and using electrolysis hydrogen as a reducing agent.

As a system for producing hydrogen by electrochemically decomposing water, for example, a system in PTL 1 is known. PTL 1 discloses a system including an oxygen electrode inlet supply line that supplies an oxygen electrode inlet supply gas containing oxygen to an oxygen electrode of an electrochemical cell, and an oxygen electrode side outlet line that discharges an oxygen electrode outlet gas containing produced oxygen.

### Citation List

### Patent Literature

[PTL 1] Japanese Unexamined Patent Application Publication No. 2008-115430

### Summary of Invention

### Technical Problem

For example, SOEC is operated at an internal pressure of an atmospheric pressure to approximately 3 MPa and an internal temperature of an atmospheric temperature to approximately 550°C. When the SOEC is stopped during a normal operation, a device for supplying air and water vapor to the electrolysis module during the normal operation is operated, the internal pressure is lowered to the atmospheric pressure, and the internal temperature is lowered to a temperature of the air and the water vapor.

On the other hand, when power supplied to the SOEC is cut off due to a power failure or the like, the device for supplying the air and the water vapor to the electrolysis module is brought into a non-operated state during the normal operation, thereby causing problems as follows. It is not possible to lower the internal pressure while managing a differential pressure between a hydrogen recovery system and an air supply system, or to lower the internal temperature. In order to solve this problem, it is conceivable to provide an emergency power supply facility for supplying power to the device for supplying the air and the water vapor to the electrolysis module. However, providing the emergency power supply facility to prepare for a case where the power supplied to the SOEC is cut off due to the power failure or the like is a factor that deteriorates facility economic efficiency.

The present disclosure has been made in view of the above-described circumstances, and an object of the present disclosure is to provide an electrolysis system and a control method for an electrolysis system, in which a pressure and a temperature inside an electrolysis module can be appropriately lowered without deteriorating facility economic efficiency while managing a differential pressure between a hydrogen recovery system and an air supply system, when a power supply is cut off due to a power failure or the like.

### Solution to Problem

In order to solve the above-described problems, an electrolysis system and an operating method for an electrolysis system of the present disclosure adopt the following means.

According to an aspect of the present disclosure, there is provided an electrolysis system including an electrolysis module that includes an oxygen electrode and a hydrogen electrode, and that electrolyzes water vapor supplied to the hydrogen electrode to generate hydrogen in the hydrogen electrode and to generate oxygen in the oxygen electrode, a water vapor supply system that supplies the water vapor to the hydrogen electrode, a hydrogen recovery system that recovers a hydrogen mixed gas containing the water vapor supplied to the hydrogen electrode and the hydrogen generated in the hydrogen electrode, an air supply system that supplies air to the oxygen electrode, an oxygen recovery system that recovers an oxygen mixed gas containing the air supplied to the oxygen electrode and the oxygen generated in the oxygen electrode, a first release system that releases the hydrogen mixed gas from the hydrogen recovery system to an atmosphere, a second release system that releases the oxygen mixed gas from the oxygen recovery system to the atmosphere, a first release valve disposed in the first release system, a second release valve disposed in the second release system, and a control unit that controls opening degrees of the first release valve and the second release valve to be adjustable when the electrolysis module is stopped.

According to another aspect of the present disclosure, there is provided a control method for an electrolysis system. The electrolysis system includes an electrolysis module that includes an oxygen electrode and a hydrogen electrode, and that electrolyzes water vapor supplied to the hydrogen electrode to generate hydrogen in the hydrogen electrode and to generate oxygen in the oxygen electrode, a water vapor supply system that supplies the water vapor to the hydrogen electrode, a hydrogen recovery system that recovers a hydrogen mixed gas containing the water vapor supplied to the hydrogen electrode and the hydrogen generated in the hydrogen electrode, an air supply system that supplies air to the oxygen electrode, an oxygen recovery system that recovers an oxygen mixed gas containing the air supplied to the oxygen electrode and the oxygen generated in the oxygen electrode, a first release system that releases the hydrogen mixed gas from the hydrogen recovery system to an atmosphere, a second release system that releases the oxygen mixed gas from the oxygen recovery system to the atmosphere, a first release valve disposed in the first release system, and a second release valve disposed in the second release system.

The control method includes a release step of controlling opening degrees of the first release valve and the second release valve to be adjustable when the electrolysis module is stopped.

### Advantageous Effects of Invention

According to the present disclosure, it is possible to provide an electrolysis system and a control method for an electrolysis system, in which a pressure inside an electrolysis module can be lowered to an atmospheric pressure, and a temperature inside the electrolysis module can be appropriately lowered without deteriorating facility economic efficiency, while managing a differential pressure between a hydrogen recovery system and an air supply system when a power supply is cut off due to a power failure or the like.

### Brief Description of Drawings

FIG. 1 is a cross-sectional view showing an aspect of an electrochemical cell stack according to a first embodiment of the present disclosure.
FIG. 2 is a perspective view showing an aspect of an electrochemical cell module according to the first embodiment of the present disclosure.
FIG. 3 is a cross-sectional view showing an aspect of an electrochemical cell cartridge according to the first embodiment of the present disclosure.
FIG. 4 is a schematic configuration diagram showing an electrolysis system according to the first embodiment of the present disclosure.
FIG. 5 is a flowchart showing a control method for an electrolysis system according to the first embodiment of the present disclosure.
FIG. 6 is a schematic configuration diagram showing an electrolysis system according to a second embodiment of the present disclosure.
FIG. 7 is a flowchart showing a control method for an electrolysis system according to the second embodiment of the present disclosure.
FIG. 8 is a schematic configuration diagram showing an electrolysis system according to a third embodiment of the present disclosure.

### Description of Embodiments

### [First Embodiment]

Hereinafter, an electrolysis system and an operating method for an electrolysis system according to a first embodiment of the present disclosure will be described with reference to the drawings.

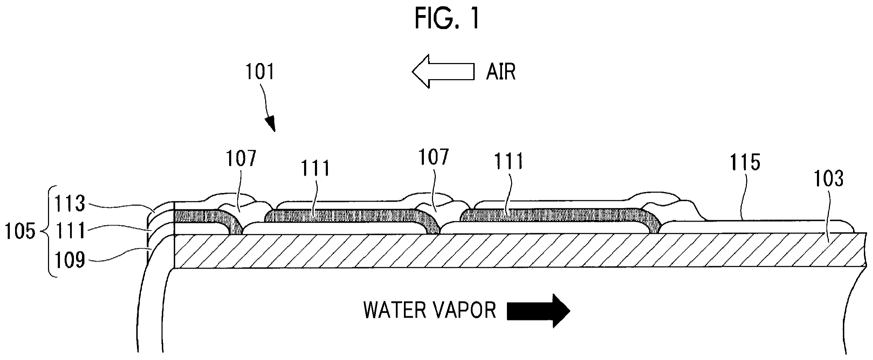

First, a solid oxide electrolysis module (SOEC) provided in the electrolysis system according to the first embodiment of the present disclosure will be described with reference to FIGS. 1 to 3.

In the following, for convenience of description, a positional relationship between respective configuration elements described by using expressions of "up" and "down", based on a paper surface indicates a vertically upper side and a vertically lower side, respectively. In addition, in the present embodiment, when it is described that the same advantageous effect is achieved in an up-down direction and a horizontal direction, the up-down direction on the paper surface is not necessarily limited to a vertically up-down direction, and may correspond to the horizontal direction orthogonal to a vertical direction, for example.

In addition, hereinafter, a tubular solid oxide electrolysis module (SOEC) will be described as an example of a cell stack of a solid oxide electrochemical cell. Meanwhile, the present disclosure is not necessarily limited thereto, and for example, a flat plate-shaped cell stack may be adopted. Although an electrochemical cell is formed on a substrate, an electrode (hydrogen electrode 109 or oxygen electrode 113) may be formed thick instead of the substrate, and may be combinedly used as the substrate.

First, a tubular cell stack using a substrate pipe will be described as example according to the present embodiment with reference to FIG. 1. When the substrate pipe is not used, for example, the hydrogen electrode 109 may be formed thick, and may be combinedly used as the substrate pipe. The present disclosure is not limited to the use of the substrate pipe. In addition, in the description, the substrate pipe in the present embodiment adopts a tubular shape. However, the substrate pipe may have a tubular shape, and a cross section thereof is not necessarily limited to a circular shape. For example, the substrate pipe may have an elliptical shape. The substrate pipe may be a flat tubular cell stack in which a tubular peripheral surface is vertically crushed.

Here, FIG. 1 shows an aspect of a cell stack according to the embodiment. As an example, a cell stack 101 includes a tubular substrate pipe 103, a plurality of electrochemical single cells 105 formed on an outer peripheral surface of the substrate pipe 103, and an interconnector 107 formed between the electrochemical single cells 105 adjacent to each other. The electrochemical single cell 105 is formed by stacking the hydrogen electrode 109, a solid electrolyte film 111, and the oxygen electrode 113.

In addition, in a plurality of the electrochemical single cells 105 formed on an outer peripheral surface of the substrate pipe 103, the cell stack 101 includes a lead film 115 electrically connected via an interconnector 107 to the oxygen electrode 113 of the electrochemical single cell 105 formed in one end of a most end of the substrate pipe 103 in the axial direction, and a lead film 115 electrically connected to the hydrogen electrode 109 of the electrochemical single cell 105 formed in the other end of the most end of the substrate pipe 103.

The substrate pipe 103 is formed of a porous material, and for example, CaO stabilized ZrO₂ (CSZ), a mixture (CSZ + NiO) of CSZ and nickel oxide (NiO), Y₂O₃ stabilized ZrO₂ (YSZ), MgAl₂O₄ and the like are used as main components. The substrate pipe 103 supports the electrochemical single cell 105, the interconnector 107, and the lead film 115, and diffuses the water vapor supplied to an inner peripheral surface of the substrate pipe 103 to the hydrogen electrode 109 formed on the outer peripheral surface of the substrate pipe 103 via pores of the substrate pipe 103.

The hydrogen electrode 109 is formed of an oxide of a composite material of Ni and a zirconia-based electrolyte material, and, for example, Ni/YSZ is used. A thickness of the hydrogen electrode 109 is 50 µm to 250 µm, and the hydrogen electrode 109 may be formed by performing screen printing on a slurry. In this case, in the hydrogen electrode 109, Ni as a component of the hydrogen electrode 109 has a catalytic action on the water vapor. In the catalytic action, the water vapor (H₂O) supplied via the substrate pipe 103 reacts to electrolyze hydrogen molecules (H₂) and oxygen ions (O²⁻).

As the solid electrolyte film 111, a ceramic oxide (for example, YSZ) having airtightness by which a gas is less likely to pass through and high oxygen ion conductivity at a high temperature is mainly used. The solid electrolyte film 111 moves oxygen ions (O²⁻) generated by the hydrogen electrode 109 to the oxygen electrode 113. A film thickness of the solid electrolyte film 111 located on a surface of the hydrogen electrode 109 is 10 µm to 100 µm, and the solid electrolyte film 111 may be formed by performing screen printing on a slurry.

For example, the oxygen electrode 113 is formed of a LaSrMnO₃-based oxide or a LaCoO₃-based oxide, and the oxygen electrode 113 is applied by performing screen printing on the slurry or by using a dispenser. In the oxygen electrode 113, in the vicinity of an interface with the solid electrolyte film 111, the oxygen ions moved after passing through the solid electrolyte film 111 from the hydrogen electrode 109 causes an electrolysis reaction to release electrons, and oxygen atoms are joined to generate oxygen.

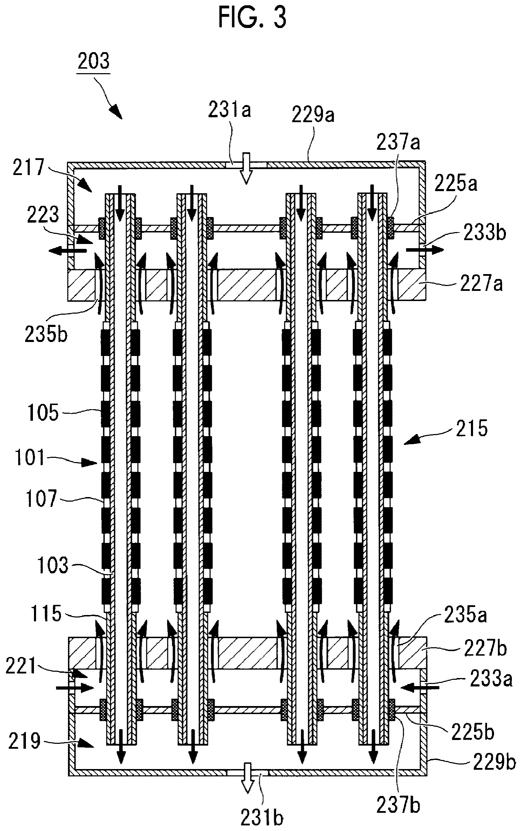

The oxygen generated by the oxygen electrode 113 can be merged with an oxidizing gas (cooling fluid) circulating through a reaction chamber 215 (refer to FIG. 3) to generate the oxidizing gas having improved oxygen.

The oxidizing gas is gas containing the oxygen of approximately 15% to 30%, and representatively, the air is preferably used. However, in addition to the air, a mixed gas of a combustion exhaust gas and the air, a mixed gas of the oxygen and the air, or the like can be used.

The interconnector 107 is formed of a conductive perovskite type oxide represented by M₁₋ₓLₓTiO₃ (M is an alkaline earth metal element, and L is a lanthanoid element) such as SrTiO₃, and is formed by performing screen printing on a slurry. The interconnector 107 is a dense film so that the water vapor and the oxidizing gas do not mix with each other.

In addition, the interconnector 107 has stable durability and electric conductivity under both an oxidizing atmosphere and a reducing atmosphere. The interconnector 107 electrically connects the oxygen electrode 113 of one electrochemical single cell 105 and the hydrogen electrode 109 of the other electrochemical single cell 105 in the adjacent electrochemical single cells 105, and connects the adjacent electrochemical single cells 105 in series.

The lead film 115 needs to have electron conductivity and to have a thermal expansion coefficient close to that of other materials forming the cell stack 101. Therefore, the lead film 115 is formed of a composite material of Ni and zirconia-based electrolyte material such as Ni/YSZ, or M₁₋ₓLₓTiO₃ (M is an alkaline earth metal element, and L is a lanthanoid element) such as SrTiO₃. The lead film 115 supplies power required for the electrolysis reaction to the plurality of electrochemical single cells 105 connected in series by the interconnector 107.

The substrate pipe 103 on which slurry films of the hydrogen electrode 109, the solid electrolyte film 111, and the interconnector 107 are formed is co-sintered in the atmosphere. For example, a sintering temperature is 1,350°C to 1,450°C. Next, the substrate pipe 103 on which the slurry film of the oxygen electrode 113 is formed is sintered in the atmosphere on the co-sintered substrate pipe 103. For example, the sintering temperature is 1,100°C to 1,250°C. The sintering temperature here is lower than a co-sintering temperature after the substrate pipe 103 to the interconnector 107 are formed.

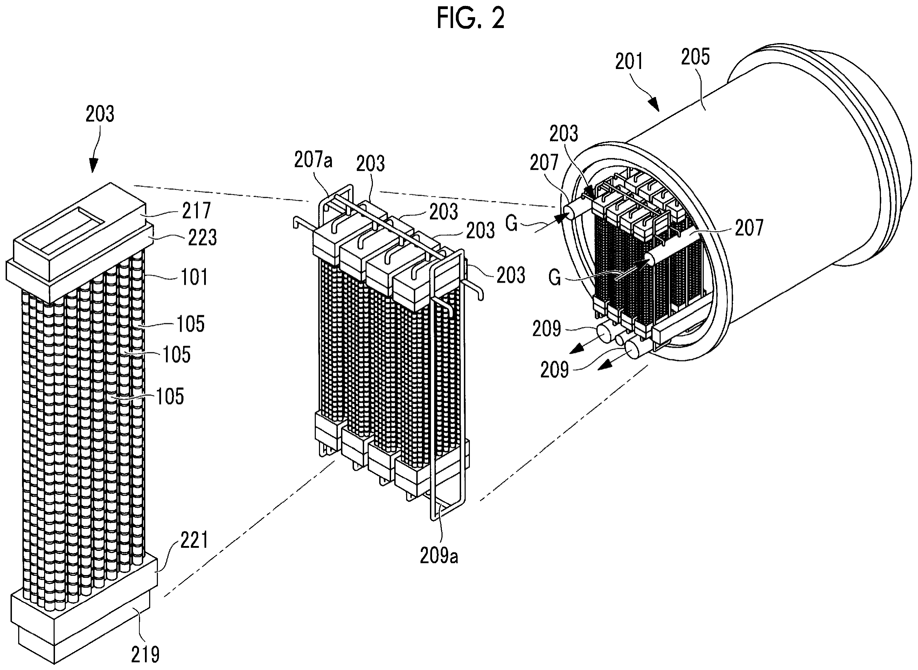

Next, an electrochemical cell cartridge and an electrochemical cell module according to the present embodiment will be described with reference to FIGS. 2 and 3. Here, FIG. 2 is a perspective view showing an aspect of the solid oxide electrolysis module (SOEC) module according to the present embodiment. In addition, FIG. 3 is a cross-sectional view showing an aspect of a solid oxide electrolysis module (SOEC) cartridge according to the present embodiment.

As shown in FIG. 2, for example, the SOEC module (electrochemical cell module) 201 includes a plurality of SOEC cartridges (electrochemical cell cartridges) 203 and a module container 205 that accommodates the plurality of SOEC cartridges 203. In addition, although the tubular SOEC cell stack 101 is described as an example in FIG. 2, the configuration is not necessarily limited thereto, and for example, a flat plate-shaped cell stack may be adopted.

In addition, the SOEC module 201 includes a water vapor supply pipe 207, a plurality of water vapor supply branch pipes 207a, a water vapor discharge pipe 209, and a plurality of water vapor discharge branch pipes 209a. In addition, the SOEC module 201 includes an oxide gas supply pipe (not shown), an oxide gas supply branch pipe (not shown), an oxide gas discharge pipe (not shown), and a plurality of oxidizing gas discharge branch pipes (not shown).

The water vapor supply pipe 207 is provided inside the module container 205, is connected to a water vapor supply unit that supplies the water vapor having a predetermined flow rate corresponding to the amount of electrolysis of the SOEC module 201, and is connected to the plurality of water vapor supply branch pipes 207a. The water vapor supply pipe 207 branches and guides water vapor G having a predetermined flow rate supplied from the water vapor supply unit described above to the plurality of water vapor supply branch pipes 207a.

In addition, the water vapor supply branch pipe 207a is connected to the water vapor supply pipe 207, and is connected to the plurality of SOEC cartridges 203. The water vapor supply branch pipe 207a guides the water vapor supplied from the water vapor supply pipe 207 to the plurality of SOEC cartridges 203 at an approximately equal flow rate, and causes electrolysis performance of the plurality of SOEC cartridges 203 to be approximately uniform.

The water vapor discharge branch pipe 209a is connected to the plurality of SOEC cartridges 203, and is connected to the water vapor discharge pipe 209. The water vapor discharge branch pipe 209a guides the water vapor (hereinafter, referred to as "exhaust water vapor") in which the hydrogen discharged from the SOEC cartridge 203 is enriched, to the water vapor discharge pipe 209.

In addition, the water vapor discharge pipe 209 is connected to the plurality of water vapor discharge branch pipes 209a, and a part of the water vapor discharge pipe 209 is disposed outside the module container 205. The water vapor discharge pipe 209 guides the exhaust water vapor derived from the water vapor discharge branch pipe 209a at a substantially equal flow rate, to the outside of the module container 205.

The module container 205 is operated at an internal pressure of an atmospheric pressure to approximately 3 MPa and an internal temperature of an atmospheric temperature to approximately 550°C. Therefore, a material having pressure resistance and corrosion resistance to an oxygen containing gas such as oxygen contained in the oxidizing gas is used. For example, stainless steel material such as SUS304 is preferably adopted.

Here, in the present embodiment, an aspect in which the plurality of SOEC cartridges 203 are collected and accommodated in the module container 205 has been described. However, the present disclosure is not limited thereto, and for example, an aspect in which the SOEC cartridges 203 are accommodated in the module container 205 without being collected can also be adopted.

As shown in FIG. 3, the SOEC cartridge 203 includes a plurality of cell stacks 101, a reaction chamber 215, a water vapor supply header 217, a water vapor discharge header 219, an oxidizing gas supply header (air supply header) 221, and an oxidizing gas discharge header 223. In addition, the SOEC cartridge 203 includes an upper pipe plate 225a, a lower pipe plate 225b, an upper heat insulator 227a, and a lower heat insulator 227b.

In the present embodiment, the SOEC cartridge 203 has a structure in which the water vapor supply header 217, the water vapor discharge header 219, the oxidizing gas supply header 221, and the oxidizing gas discharge header 223 are disposed as shown in FIG. 3 such that the water vapor and the oxidizing gas flow while facing an inner side and an outer side of the cell stack 101. However, this structure is not necessarily required. For example, the water vapor and the oxidizing gas may flow parallel to the inner side and the outer side of the cell stack 101, and the oxidizing gas may flow in a direction orthogonal to a longitudinal direction of the cell stack 101.

The reaction chamber 215 is a region formed between the upper heat insulator 227a and the lower heat insulator 227b. The reaction chamber 215 is a region where the electrochemical single cell 105 of the cell stack 101 is disposed, and is a region where water vapor is electrochemically reacted and electrolyzed. In addition, the temperature in the vicinity of the central portion of the reaction chamber 215 in the longitudinal direction of the cell stack 101 may be monitored by a temperature measurement unit (temperature sensor, thermocouple, or the like), and a high-temperature atmosphere of approximately 700°C to 1,000°C is formed during a steady operation of the SOEC module 201.

The water vapor supply header 217 is a region surrounded by an upper casing 229a and the upper pipe plate 225a of the SOEC cartridge 203, and communicates with the water vapor supply branch pipe 207a through a water vapor supply hole 231a provided in an upper portion of the upper casing 229a. In addition, the plurality of cell stacks 101 are joined by the upper pipe plate 225a and a seal member 237a, and the water vapor supply header 217 guides the water vapor supplied from the water vapor supply branch pipe 207a via the water vapor supply hole 231a into the substrate pipe 103 of the plurality of cell stacks 101 at a substantially uniform flow rate, and causes the electrolysis performance of the plurality of cell stacks 101 to be substantially uniform.

The water vapor discharge header 219 is a region surrounded by a lower casing 229b and the lower pipe plate 225b of the SOEC cartridge 203, and communicates with a water vapor discharge branch pipe 209a (not shown) through a water vapor discharge hole 231b provided in the lower casing 229b. In addition, the plurality of cell stacks 101 are joined by the lower pipe plate 225b and a seal member 237b, and the water vapor discharge header 219 collects the exhaust water vapor supplied to the water vapor discharge header 219 after passing through the inside of the substrate pipe 103 of the plurality of cell stacks 101, and guides the exhaust water vapor to the water vapor discharge branch pipe 209a via the water vapor discharge hole 231b.

The oxidizing gas having a predetermined gas composition and a predetermined flow rate is branched to the oxidizing gas supply branch pipe in accordance with the amount of electrolysis of the SOEC module 201, and is supplied to the plurality of SOEC cartridges 203. The oxidizing gas supply header 221 is a region surrounded by the lower casing 229b, the lower pipe plate 225b, and the lower heat insulator 227b of the SOEC cartridge 203, and communicates with an oxidizing gas supply branch pipe (not shown) through an oxidizing gas supply hole 233a provided on side surface of the lower casing 229b. The oxidizing gas supply header 221 guides the oxidizing gas having predetermined flow rate which is supplied from the oxidizing gas supply branch pipe (not shown) via the oxidizing gas supply hole 233a, to the reaction chamber 215 via an oxidizing gas supply gap 235a (to be described later).

The oxidizing gas discharge header 223 is a region surrounded by the upper casing 229a, the upper pipe plate 225a, and the upper heat insulator 227a of the SOEC cartridge 203, and communicates with an oxidizing gas discharge branch pipe (not shown) through an oxidizing gas discharge hole 233b provided on the side surface of the upper casing 229a. The oxidizing gas discharge header 223 guides the oxidizing gas (hereinafter, referred to as an "exhaust oxidizing gas") in which the oxygen supplied from the reaction chamber 215 to the oxidizing gas discharge header 223 via an oxidizing gas discharge gap 235b (described later) is enriched, to an oxidizing gas discharge branch pipe (not shown) via the oxidizing gas discharge hole 233b.

The upper pipe plate 225a is fixed to a side plate of the upper casing 229a such that the upper pipe plate 225a, a top plate of the upper casing 229a, and the upper heat insulator 227a are substantially parallel to each other, between the top plate of the upper casing 229a and the upper heat insulator 227a. In addition, the upper pipe plate 225a is provided with a plurality of holes corresponding to the number of the cell stacks 101 provided in the SOEC cartridge 203, and the cell stacks 101 are respectively inserted into the holes. The upper pipe plate 225a airtightly supports one end portion of the plurality of cell stacks 101 via one or both of the seal member 237a and an adhesive member, and isolates the water vapor supply header 217 and the oxidizing gas discharge header 223 from each other.

The upper heat insulator 227a is disposed in a lower end portion of the upper casing 229a such that the upper heat insulator 227a, the top plate of the upper casing 229a, and the upper pipe plate 225a are substantially parallel to each other, and is fixed to the side plate of the upper casing 229a. In addition, the upper heat insulator 227a is provided with a plurality of holes corresponding to the number of the cell stacks 101 provided in the SOEC cartridge 203. A diameter of the hole is set to be larger than an outer diameter of the cell stack 101. The upper heat insulator 227a includes the oxidizing gas discharge gap 235b formed between an inner surface of the hole and an outer surface of the cell stack 101 inserted into the upper heat insulator 227a.

The upper heat insulator 227a partitions the reaction chamber 215 and the oxidizing gas discharge header 223, and suppresses strength degradation caused by a temperature increase in the atmosphere around the upper pipe plate 225a, or an increase in corrosion caused by an oxygen containing gas contained in the oxidizing gas. In addition, in order to suppress thermal deformation of the upper pipe plate 225a or the like due to a temperature difference when the upper pipe plate 225a or the like is exposed to a high temperature inside the reaction chamber 215, a metallic material having high temperature durability such as a Ni-based alloy may be used. In addition, the upper heat insulator 227a guides the exhaust oxidizing gas exposed to the high temperature after passing through the reaction chamber 215, to the oxidizing gas discharge header 223 through the oxidizing gas discharge gap 235b.

According to the present embodiment, due to a structure of the SOEC cartridge 203 described above, the water vapor and the exhaust oxidizing gas are caused to flow while facing the inside and the outside the cell stack 101. In this manner, the exhaust oxidizing gas exchanges heat with the water vapor supplied to the reaction chamber 215 through the inside of the substrate pipe 103, is cooled to a temperature at which deformation such as buckling of the upper pipe plate 225a or the like formed of metallic material does not occur, and is supplied to the oxidizing gas discharge header 223. In addition, the temperature of the water vapor is raised by heat exchange with the exhaust oxidizing gas discharged from the reaction chamber 215, and the water vapor is supplied to the reaction chamber 215. As a result, the water vapor preheated to a temperature suitable for electrolysis can be supplied to the reaction chamber 215 without using a heater or the like.

The lower pipe plate 225b is fixed to the side plate of the lower casing 229b such that the lower pipe plate 225b, the bottom plate of the lower casing 229b, and the lower heat insulator 227b are substantially parallel to each other, between the bottom plate of the lower casing 229b and the lower heat insulator 227b. The lower pipe plate 225b is provided with a plurality of holes corresponding to the number of the cell stacks 101 provided in the SOEC cartridge 203, and the cell stacks 101 are respectively inserted into the holes. The lower pipe plate 225b airtightly supports the other end portion of the plurality of cell stacks 101 via one or both of the seal member 237b and an adhesive member, and isolates the water vapor discharge header 219 and the oxidizing gas supply header 221.

The lower heat insulator 227b is disposed in an upper end portion of the lower casing 229b such that the lower heat insulator 227b, a bottom plate of the lower casing 229b, and the lower pipe plate 225b are substantially parallel to each other, and is fixed to a side plate of the lower casing 229b. In addition, the lower heat insulator 227b is provided with a plurality of holes corresponding to the number of the cell stacks 101 provided in the SOEC cartridge 203. A diameter of the hole is set to be larger than an outer diameter of the cell stack 101. The lower heat insulator 227b includes the oxidizing gas supply gap 235a formed between the inner surface of the hole and the outer surface of the cell stack 101 inserted into the lower heat insulator 227b.

The lower heat insulator 227b partitions the reaction chamber 215 and the oxidizing gas supply header 221, and suppresses strength degradation caused by a temperature increase in the atmosphere around the lower pipe plate 225b, or an increase in corrosion caused by an oxygen containing gas contained in the oxidizing gas. The lower pipe plate 225b or the like is formed of high temperature durable metallic material such as Inconel, but prevents thermal deformation when the lower pipe plate 225b or the like is exposed to the high temperature, and the temperature difference inside the lower pipe plate 225b or the like increases. In addition, the lower heat insulator 227b guides the oxidizing gas supplied to the oxidizing gas supply header 221 to the reaction chamber 215 through the oxidizing gas supply gap 235a.

According to the present embodiment, due to the structure of the SOEC cartridge 203 described above, the exhaust water vapor and the oxidizing gas flow while facing the inside and the outside the cell stack 101. In this manner, the exhaust water vapor passing through the reaction chamber 215 after passing through the inside of the substrate pipe 103 exchanges heat with the oxidizing gas supplied to the reaction chamber 215, is cooled to a temperature at which deformation such as buckling of the lower pipe plate 225b or the like formed of a metallic material does not occur, and is supplied to the water vapor discharge header 219. In addition, the temperature of the oxidizing gas is raised by heat exchange with the exhaust water vapor, and the oxidizing gas is supplied to the reaction chamber 215.

Direct current power required for the electrolysis reaction in the reaction chamber 215 is supplied to the SOEC module 201 after alternating current power supplied from a power supply system is converted into the direct current power by a power conversion device (inverter or the like) such as a power conditioner (not shown). The plurality of SOEC cartridges 203 are electrically connected to the SOEC module 201 such that a predetermined number of the SOEC cartridges 203 are connected in series and a predetermined number of the SOEC cartridges 203 are connected in parallel, and thus, the direct current power can be supplied to the plurality of electrochemical single cells 105 via the lead film 115 provided in an end portion of the cell stack 101.

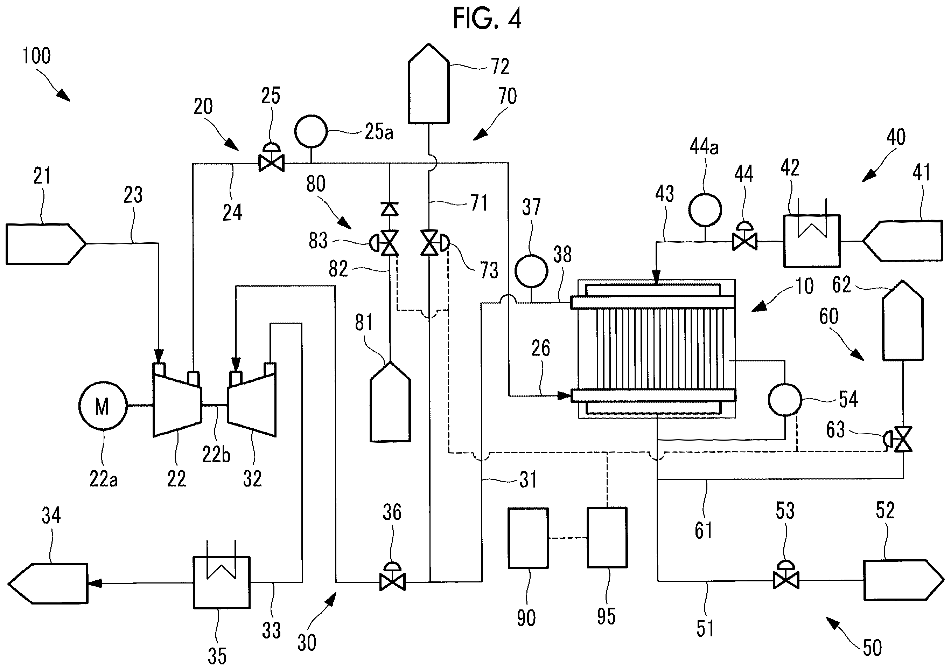

Next, an electrolysis system 100 according to the first embodiment of the present disclosure will be described with reference to FIG. 4. Although FIG. 4 shows an example of a pressurizing type electrolysis system, the present disclosure is not limited thereto, and can be applied to a normal pressure type system.

As shown in FIG. 4, the electrolysis system 100 includes an electrolysis module 10, an air supply system 20, an oxygen recovery system 30, a water vapor supply system 40, a hydrogen recovery system 50, a hydrogen-enriched water vapor release system (first release system) 60, an exhaust air release system (second release system) 70, an air injection system 80, an emergency power supply facility 90, and a control device (control unit) 95. The electrolysis module 10 is the solid oxide electrolysis module described above.

The electrolysis module 10 is the solid oxide electrolysis module described with reference to FIGS. 1 to 3, and generates hydrogen and oxygen by electrolyzing the water vapor supplied via the water vapor supply system 40. The hydrogen-enriched water vapor (hydrogen mixed gas) containing the generated hydrogen and the water vapor which is not decomposed is discharged to the hydrogen recovery system 50.

As shown in FIG. 4, the air is supplied to the electrolysis module 10 via a second air supply pipe 24 (to be described later). The exhaust air (oxygen mixed gas) containing the oxygen generated by the electrolysis module 10 and the air is discharged from the electrolysis module 10 via a first exhaust air pipe 31 (to be described later). The exhaust air is the air enriched with oxygen (oxygen-enriched air). The temperature of the exhaust air discharged from the electrolysis module 10 to the first exhaust air pipe 31 is higher (for example, approximately 550°C to 650°C) than the temperature at the time of supply.

The air supply system 20 is a system that supplies the air to the oxygen electrode 113 of the electrolysis module 10. The air supply system 20 includes an air supply unit 21, a compressor (pressure raising unit) 22 that compresses the air supplied from the air supply unit 21, a first air supply pipe 23 that guides the air from the air supply unit 21 to the compressor 22, and a second air supply pipe 24 that guides the air compressed by the compressor 22 to the electrolysis module 10. The second air supply pipe 24 connects the compressor 22 and the electrolysis module 10.

The compressor 22 is connected to a motor 22a, and is driven by a driving force of the motor 22a. The compressor 22 compresses the air supplied from the air supply unit 21 via the first air supply pipe 23. The compressor 22 discharges the compressed air to the second air supply pipe 24. The compressor 22 is connected to a turbine 32 and a rotary shaft 22b (to be described later). The compressor 22 raises the pressure of the air (for example, approximately 0.2 MPa). The compressor 22 may raise the pressure of the air to 1 MPa or higher. The first air supply pipe 23 connects the air supply unit 21 and the compressor 22.

The second air supply pipe 24 is provided with a supply air flow rate adjusting valve 25. The supply air flow rate adjusting valve 25 adjusts the flow rate of the air circulating through the inside of the second air supply pipe 24 by adjusting an opening degree such that the flow rate of the air which is measured by the flow rate measurement unit 25a becomes a target flow rate. The opening degree of the supply air flow rate adjusting valve 25 is controlled by a control device 95.

The oxygen recovery system 30 is a system that recovers the exhaust air containing the oxygen and the air which are discharged from the electrolysis module 10. The oxygen recovery system 30 includes a first exhaust air pipe 31 through which the exhaust air discharged from the electrolysis module 10 circulates, the turbine 32 to which a downstream end of the first exhaust air pipe 31 is connected, a second exhaust air pipe 33 through which the exhaust air discharged from the turbine 32 circulates, an exhaust air discharge unit 34 that discharges the exhaust air circulating through the second exhaust air pipe 33 to the outside of the system, an exhaust air cooler 35 disposed in the second exhaust air pipe 33, and an exhaust air flow rate adjusting valve 36 disposed in the first exhaust air pipe 31. The first exhaust air pipe 31 connects the electrolysis module 10 and the turbine 32.

The turbine 32 is rotated by the supplied exhaust air. When the turbine 32 rotates, the rotary shaft 22b connected to the turbine 32 also rotates. The compressor 22 connected to the rotary shaft 22b is rotated by the rotation of the rotary shaft 22b. In this way, the turbine 32 drives the compressor 22 with the supplied exhaust air, and thus, the power for compressing the air can be reduced. The second exhaust air pipe 33 connects the turbine 32 and the exhaust air discharge unit 34.

The exhaust air cooler 35 is a device that cools the exhaust air circulating through the second exhaust air pipe 33 by exchanging heat with a cooling medium. The exhaust air cooler 35 condenses the water vapor contained in the exhaust air, and removes the condensed water vapor from the exhaust air.

The pressure measurement unit 37 measures the pressure of the exhaust air to be supplied from the oxygen electrode 113 of the electrolysis module 10 to the first exhaust air pipe 31 of the oxygen recovery system 30.

The water vapor supply system 40 is a system that supplies the water vapor to the hydrogen electrode 109. The water vapor supply system 40 includes a water vapor supply unit 41, a superheater 42 that superheats the water vapor supplied from the water vapor supply unit 41, a water vapor supply pipe 43 that guides the water vapor from the water vapor supply unit 41 to the hydrogen electrode 109 of the electrolysis module 10, a water vapor flow rate adjusting valve 44, and a flow rate measurement unit 44a. The water vapor flow rate adjusting valve 44 adjusts the flow rate of the water vapor circulating through the inside of the water vapor supply pipe 43 by adjusting the opening degree such that the flow rate of the water vapor which is measured by the flow rate measurement unit 44a becomes a target flow rate. The opening degree of the water vapor flow rate adjusting valve 44 is controlled by the control device 95. The water vapor supply unit 41 is connected to the water vapor supply pipe 207 (refer to FIG. 2).

The hydrogen recovery system 50 is a system that recovers the hydrogen-enriched water vapor containing the water vapor supplied to the hydrogen electrode 109 and the hydrogen generated in the hydrogen electrode 109. The hydrogen recovery system 50 includes a hydrogen-enriched water vapor pipe 51 through which hydrogen-enriched water vapor discharged from the hydrogen electrode 109 of the electrolysis module 10 circulates, a hydrogen-enriched water vapor recovery unit 52 that discharges the hydrogen-enriched water vapor circulating through the hydrogen-enriched water vapor pipe 51 to the outside of the system, a hydrogen-enriched water vapor flow rate adjusting valve 53, and a differential pressure measurement unit 54.

During a normal operation in which the electrolysis module 10 electrolyzes the water vapor to generate hydrogen in the hydrogen electrode 109, the control device 95 controls the opening degree of the hydrogen-enriched water vapor flow rate adjusting valve 53 such that the hydrogen-enriched water vapor having a predetermined flow rate is supplied to the hydrogen-enriched water vapor recovery unit 52. The hydrogen-enriched water vapor recovery unit 52 is connected to the water vapor discharge pipe 209 (refer to FIG. 2).

The differential pressure measurement unit 54 measures a differential pressure between the pressure of the hydrogen-enriched water vapor circulating through the hydrogen recovery system 50 and the pressure of the air on the oxygen electrode 113 side of the electrolysis module 10. The pressure of the air on the oxygen electrode 113 side of the electrolysis module 10 is substantially equal to the pressure of the exhaust air of the oxygen recovery system 30. The pressure difference measured by the differential pressure measurement unit 54 may be the pressure difference between the pressure (first pressure) of the hydrogen-enriched water vapor circulating through the hydrogen recovery system 50 and the pressure (second pressure) of the exhaust air of the oxygen recovery system 30.

The hydrogen-enriched water vapor release system 60 is a system connected to the hydrogen-enriched water vapor pipe 51 of the hydrogen recovery system 50 and releasing the hydrogen-enriched water vapor from the hydrogen recovery system 50 to the atmosphere. The hydrogen-enriched water vapor release system 60 includes a release pipe 61 through which the hydrogen-enriched water vapor flowing in from the hydrogen-enriched water vapor pipe 51 circulates, and a hydrogen-enriched water vapor release unit 62 that releases the hydrogen-enriched water vapor circulating through the release pipe 61 to the atmosphere. A hydrogen-enriched water vapor release valve (first release valve) 63 is disposed in the release pipe 61.

The exhaust air release system 70 is a system connected to the first exhaust air pipe 31 of the oxygen recovery system 30 and releasing the exhaust air from the oxygen recovery system 30 to the atmosphere. The exhaust air release system 70 includes a release pipe 71 through which the exhaust air flowing in from the first exhaust air pipe 31 circulates, and an exhaust air release unit 72 that releases the exhaust air circulating through the release pipe 71 into the atmosphere. An exhaust air release valve (second release valve) 73 is disposed in the release pipe 71.

The air injection system 80 is a system connected to the second air supply pipe 24 of the air supply system 20 and guiding the air in the atmosphere which is injected from the injection unit 81 to the air supply system 20. The air injection system 80 includes an injection unit 81 and an air injection pipe 82 through which the air injected from the injection unit 81 circulates. An air injection flow rate adjusting valve 83 is disposed in the air injection pipe 82. The opening degree of the air injection flow rate adjusting valve 83 is controlled by the control device 95.

The injection unit 81 of the air injection system 80 that takes the air from the atmosphere is disposed below the electrolysis module 10 in the vertical direction. In addition, the exhaust air release unit (oxygen release unit) 72 in which the exhaust air release system 70 releases the exhaust air to the atmosphere is disposed above the electrolysis module 10.

As described above, the injection unit 81, the electrolysis module 10, and the exhaust air release unit 72 are disposed in this order from the lower side to the upper side in the vertical direction. Therefore, when the pressure inside the electrolysis module 10 reaches the vicinity of the atmospheric pressure and the temperature inside the electrolysis module 10 is higher than the temperature of the atmosphere, and when the flow paths circulating in the order of the injection unit 81, the electrolysis module 10, and the exhaust air release unit 72 communicate with each other, natural ventilation occurs in this order such that the air injected from the injection unit 81 flows from the lower side to the upper side in the vertical direction.

The control device 95 is a device that controls each part of the electrolysis system 100 including the hydrogen-enriched water vapor release valve 63 and the exhaust air release valve 73. For example, the control device (controller) 95 includes a central processing unit (CPU, processor), a main memory, a secondary storage (memory), and the like. In addition, the control device 95 may include a communication unit for transmitting and receiving information to and from another device.

The emergency power supply facility 90 is a facility that supplies power to the electrolysis system 100, when the power supply from a commercial power supply to the electrolysis system 100 is cut off due to a power failure or the like. As shown in FIG. 4, when the power supply from the commercial power supply to the electrolysis system 100 is cut off, the emergency power supply facility 90 supplies the power to a part of the electrolysis system 100 including the hydrogen-enriched water vapor release valve 63, the exhaust air release valve 73, the air injection flow rate adjusting valve 83, the differential pressure measurement unit 54, and the control device 95. When the power supply from the commercial power supply to the electrolysis system 100 is cut off, the emergency power supply facility 90 does not supply the power to the other part of the electrolysis system 100 including the electrolysis module 10 and the motor 22a to which the power is supplied from the commercial power supply.

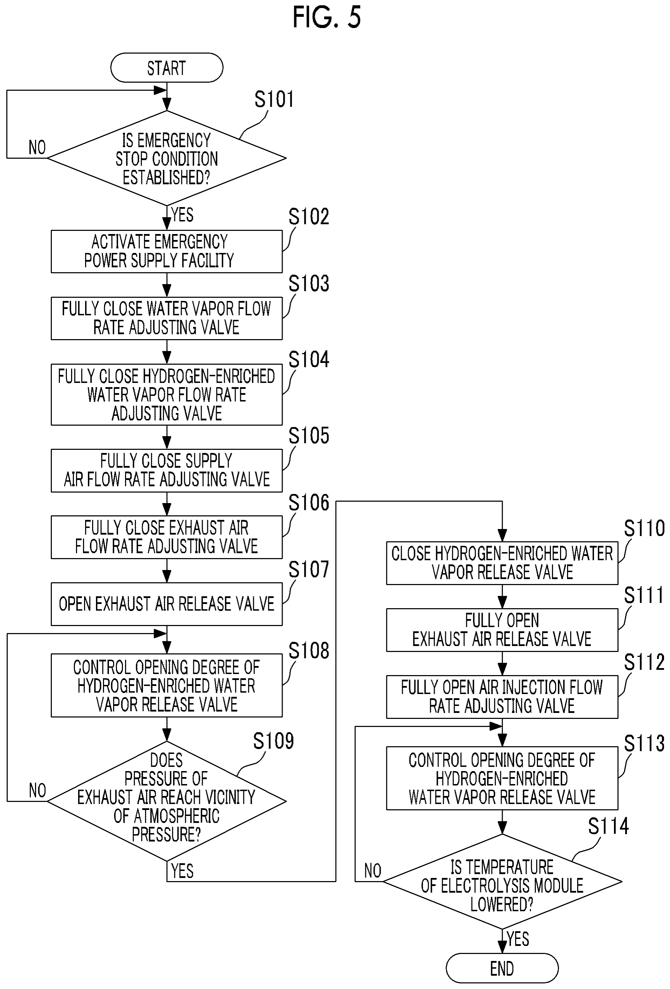

Next, a control method for the electrolysis system 100 according to the present embodiment will be described. FIG. 5 is a flowchart showing a control method for the electrolysis system 100 according to the first embodiment of the present disclosure. Since the control device 95 executes a control program, the control device 95 performs each process shown in FIG. 5. The process shown in FIG. 5 is a process started during a steady operation of the electrolysis system 100.

In Step S101, the control device 95 determines whether or not an emergency stop condition for emergently stopping the electrolysis system 100 is established, and when the determination is YES, the process proceeds to Step S102, and when the determination is NO, the determination in Step S101 is repeated. The control device 95 monitors a power supply state from the commercial power supply (not shown), and determines that the emergency stop condition is established when the power supply from the commercial power supply is cut off.

In Step S101, when the emergency stop condition is established, the control device 95 activates the emergency power supply facility 90 to start supplying the power from the emergency power supply facility 90 to a part of the electrolysis system 100 including the hydrogen-enriched water vapor release valve 63, the exhaust air release valve 73, the air injection flow rate adjusting valve 83, the differential pressure measurement unit 54, and the control device 95. (Step S102)

In the pressurizing system, when the electrolysis system 100 in a steady operation is emergently stopped, the pressure inside the electrolysis module 10 is higher than the atmospheric pressure, and the temperature inside the electrolysis module 10 is higher than the temperature of the atmosphere. Therefore, in order to directly take the cooling air into the system from the atmosphere without using the compressor, first, it is necessary to lower the internal pressure and to lower the pressure to the atmospheric pressure while controlling the differential pressure between the hydrogen recovery system 50 and the water vapor supply system 40 and the air supply system 20 within a predetermined value range.

Therefore, in the hydrogen recovery system 50 and the water vapor supply system 40, in order to prevent a backflow of the water vapor from the electrolysis module 10 to the water vapor supply unit 41 and a backflow of the hydrogen and the water vapor from the hydrogen-enriched water vapor recovery unit 52 to the electrolysis module 10, the water vapor flow rate adjusting valve 44 is fully closed in Step S103, and the hydrogen-enriched water vapor flow rate adjusting valve 53 is fully closed in Step S104.

In addition, in the air supply system 20 and the oxygen recovery system 30, in order to prevent a backflow from the air supply unit 26 to the air supply system 20 and release of the exhaust air from the oxygen supply unit 38 to the oxygen recovery system 30, the supply air flow rate adjusting valve 25 is fully closed in Step S105, and the exhaust air flow rate adjusting valve 36 is fully closed in Step S106.

In addition, both the hydrogen-enriched water vapor release valve (first release valve) 63 and the exhaust air release valve (second release valve) 73 maintain a fully closed state during an operation. In this manner, the electrolysis system is temporarily in a sealed state, and the pressure can be controlled by the hydrogen-enriched water vapor release valve (first release valve) 63 and the exhaust air release valve (second release valve) 73.

The backflow of the air from the air injection pipe 82 can be prevented by a check valve. However, an air injection cutoff valve (not shown) for sealing or the air injection flow rate adjusting valve 83 may be used without using the check valve, and in Step S104, both valves maintain the fully closed state during the operation.

Next, in order to lower the pressure of the air supply system 20 and the oxygen recovery system 30 in which a volume inside the system is large and a lowering speed of the pressure is slow in Step S107, the exhaust air release valve (second release valve) 73 is gradually opened. Simultaneously in this operation process, in Step S108, the differential pressure measurement unit 54 measures the differential pressure between the hydrogen recovery system 50 and the water vapor supply system 40 and between the air supply system 20 and the oxygen recovery system 30, and controls the opening degree of the hydrogen-enriched water vapor release valve (first release valve) 63 such that the differential pressure does not increase to an allowable value (for example, 1.0 kPa, preferably 0.5 kPa) or greater.

In Step S109, the control device 95 determines whether or not the pressure of the exhaust air which is measured by the pressure measurement unit 37 reaches the vicinity of the atmospheric pressure (for example, the difference from the atmospheric pressure is approximately 1 kPa) by the above-described operation. When the determination is YES, the process proceeds to Step S110. When the determination is NO, the operation in Step S108 is continued, and the determination in Step S109 is repeated. In the normal pressure system, the operations in Steps S107 to S109 can be omitted.

In Step S110, the control device 95 temporarily sets the hydrogen-enriched water vapor release valve (first release valve) 63 in an open state for differential pressure control to a closed state. The reason why the hydrogen-enriched water vapor release valve 63 is set to the closed state is to prevent the hydrogen electrode 109 from being oxidized and damaged, by maintaining a state where the hydrogen remains inside the electrolysis module 10 and creating a reducing atmosphere.

In Step S111, the control device 95 sets the exhaust air release valve 73 to a fully open state in preparation for receiving the air from the outside. The reason why the exhaust air release valve 73 can be set to the fully open state in Step S111 as follows. The differential pressure measured by the differential pressure measurement unit 54 falls within a predetermined range, and there is no possibility that the electrolysis module 10 is damaged by a pressure difference between the pressure of the hydrogen-enriched water vapor and the pressure of the exhaust air.

In addition, in Step S112, the air injection cutoff valve (not shown) or the air injection flow rate adjusting valve 83 is set to a fully open state to establish a flow path for the air, and the air staying inside the electrolysis module 10 is promoted to be discharged by natural ventilation.

As the temperature inside the system is lowered, the hydrogen recovery system 50 and the water vapor supply system 40 have a negative pressure (atmospheric pressure or lower) due to reduction of a gas volume and drain of the water vapor. Therefore, the opening degree of the hydrogen-enriched water vapor release valve (first release valve) 63 is controlled such that the differential pressure falls within an allowable value (for example, 1.0 kPa, preferably within 0.5 kPa) in Step S113. It is desirable to purge the inside of the system with an inert gas such as nitrogen or the air at a temperature equal to or lower than a temperature at which the hydrogen electrode 109 of the electrolysis module 10 is likely to be oxidized due to mixing of the air and at a temperature equal to or higher than a temperature at which the water vapor inside the system is likely to be drained (for example, 150 to 200°C). The control device 95 completes the process in this flowchart in response to a measurement result in Step S114 that the temperature of the electrolysis module is lowered to the vicinity of the normal temperature (for example, approximately 50°C).

According to the electrolysis system 100 of the present embodiment described above, the following operations and advantageous effects are achieved.

According to the electrolysis system 100 of the present embodiment, the hydrogen-enriched water vapor release system 60 is connected to the hydrogen recovery system 50 that recovers the hydrogen-enriched water vapor containing the hydrogen generated by the hydrogen electrode 109, and the exhaust air release system 70 is connected to the oxygen recovery system 30 that recovers the exhaust air containing the oxygen generated by the oxygen electrode 113. When the control device 95 emergently stops the electrolysis system 100, the control device 95 first lowers the internal pressure while controlling the differential pressure between the hydrogen recovery system 50 and the water vapor supply system 40 and the oxygen recovery system 30 to fall within an allowable value. Therefore, the control device 95 temporarily fully closes the flow rate adjusting valves of the hydrogen recovery system 50 and the water vapor supply system 40 and the flow rate adjusting valves of the air supply system 20 and the oxygen recovery system 30. Thereafter, the exhaust air release valve 73 is set to the open state, and the internal pressure is gradually lowered. In this case, the differential pressure between the hydrogen recovery system 50, the water vapor supply system 40 and the oxygen recovery system 30 is controlled to fall within an allowable value by the hydrogen-enriched water vapor release valve 63. After the pressure is lowered to the vicinity of the atmospheric pressure, the exhaust air release valve 73 and the air injection flow rate adjusting valve 83 are set to a fully open state, and the air for cooling the electrolysis module by natural ventilation is introduced into the system.

In the above-described operation, although it is necessary to provide the emergency power supply facility 90 minimally required for operating the hydrogen-enriched water vapor release valve 63 and the exhaust air release valve 73, it is not necessary to provide the emergency power supply facility required for operating a device that supplies the water vapor from the water vapor supply system 40 to the hydrogen electrode 109 and supplies the air from the air supply system 20 to the oxygen electrode 113. Therefore, according to the electrolysis system 100 of the present embodiment, the pressure inside the electrolysis module 10 can be lowered to the atmospheric pressure, and the temperature inside the electrolysis module 10 can be appropriately lowered without deteriorating facility economic efficiency, when the power supply is cut off due to a power failure or the like.

In addition, according to the electrolysis system 100 of the present embodiment, the control device 95 controls the opening degree (first opening degree) of the hydrogen-enriched water vapor release valve 63 and the opening degree (second opening degree) of the exhaust air release valve 73 such that the pressure difference between the pressure (first pressure) of the hydrogen-enriched water vapor measured by the differential pressure measurement unit 54 and the pressure (second pressure) of the exhaust air falls within a predetermined range. Since the pressure difference between the pressure of the hydrogen-enriched water vapor and the pressure of the exhaust air falls within the predetermined range, it is possible to appropriately prevent a possibility that the pressure difference exceeds the predetermined range to cause damage to the electrolysis module 10.

According to the electrolysis system 100 of the present embodiment, since the exhaust air release valve 73 is set to the open state, the exhaust air having a higher temperature than the atmosphere is released from the exhaust air release part 72, and after the pressure is lowered to the vicinity of the atmospheric pressure, a natural ventilation flow path of the air to be injected from the injection unit 81 to the air injection system 80 is formed. Through the natural ventilation, the air injected from the injection unit 81 into the air injection system 80 is supplied from the air supply unit 26 disposed above the injection unit 81 to the electrolysis module 10, and the high-temperature air staying inside the electrolysis module 10 is purged.

In addition, the air flowing into the electrolysis module through the natural ventilation is discharged to the first exhaust air pipe 31, and the exhaust air is discharged to the atmosphere from the exhaust air release part 72 disposed above the electrolysis module 10. Since the air injected from the injection unit 81 is supplied and discharged to the electrolysis module 10 through the natural ventilation, a time required for lowering the temperature of the electrolysis module 10 can be shortened without using power for supplying the air.

### [Second Embodiment]

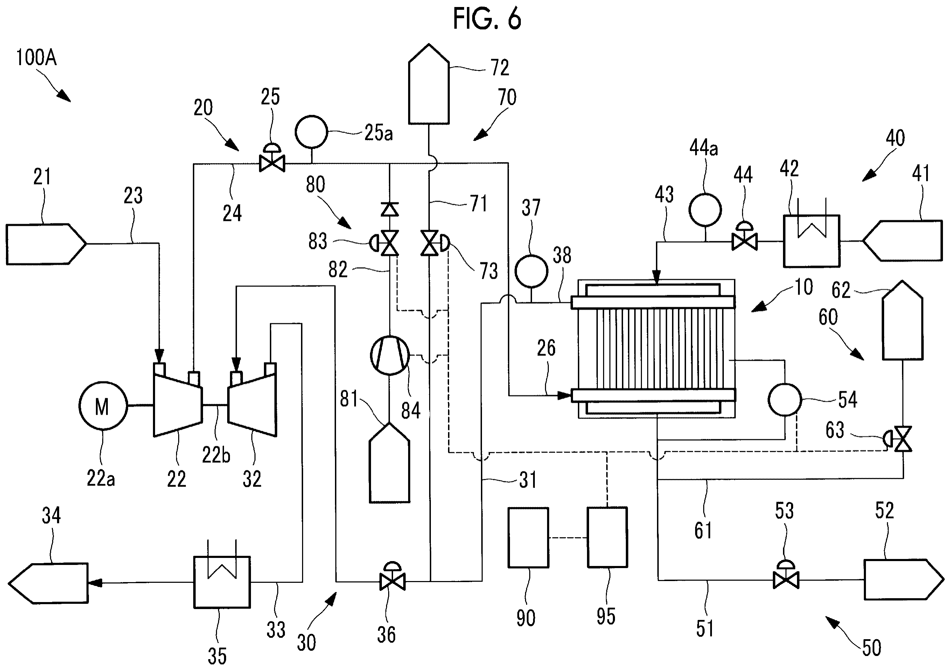

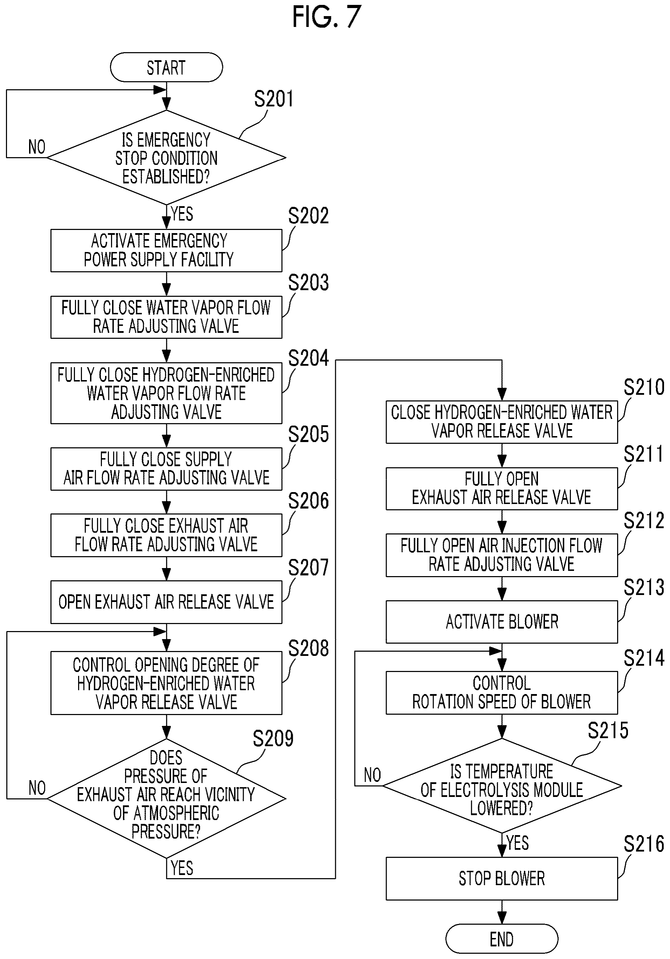

Next, an electrolysis system 100A according to a second embodiment of the present disclosure will be described with reference to the drawings. The present embodiment is a modification example of the first embodiment, and is the same as the first embodiment except for a case described below. Therefore, description thereof will be omitted below. FIG. 6 is a schematic configuration diagram showing the electrolysis system 100A according to the second embodiment of the present disclosure. FIG. 7 is a flowchart showing a control method for the electrolysis system 100A according to the second embodiment of the present disclosure.

The electrolysis system 100A of the second embodiment is different from the electrolysis system 100 of the first embodiment in that the electrolysis system 100A includes a blower 84 disposed in the air injection system 80. As shown in FIG. 6, the low pressure raising blower 84 having lower power consumption (for example, approximately 50 kPa) than the compressor is disposed in the air injection pipe 82 of the air injection system 80.

Since Steps S201 to S212 in the flowchart shown in FIG. 7 are the same as Steps S101 to S112 in the flowchart shown in FIG. 5, description thereof will be omitted below. Hereinafter, Steps S213 to S216 will be described.

In Steps S211 and S212, the control device 95 opens the exhaust air release valve 73, the air injection cutoff valve (not shown), or the air injection flow rate adjusting valve 83, and thereafter, activates the blower 84 in Step S213.

In Step S214, the control device 95 measures the differential pressure between the hydrogen recovery system 50 and the water vapor supply system 40, and between the air supply system 20 and the oxygen recovery system 30 by the differential pressure measurement unit 54, and controls a rotation speed of the blower 84 such that the differential pressure does not increase to an allowable value (for example, 1.0 kPa, preferably 0.5 kPa) or greater. After performing Step S214, the control device 95 determines in Step S215 whether or not the internal temperature of the electrolysis module 10 is lowered to the vicinity of the normal temperature. When the determination result is YES, the control device 95 proceeds the process to Step S216, and when the determination result is NO, the control device 95 proceeds the process to Step S214. In Step S216, the control device 95 stops the blower 84, and completes the process in this flowchart.

According to the electrolysis system 100A of the present embodiment, after the voltage is lowered, the blower 84 is operated by supplying the power from the emergency power supply facility 90 to the blower 84. In this manner, the temperature of the electrolysis module 10 can be reliably lowered by compensating for the air insufficient in the natural ventilation. In response to a fact that the pressure of the exhaust air which is measured by the pressure measurement unit 37 reaches the vicinity of the atmospheric pressure, the air is forcibly supplied from the air injection system 80 to the air supply system 20 by the low pressure raising blower 84. In this manner, the temperature inside the electrolysis module 10 can be reliably lowered in a short time without requiring an excessive emergency power supply facility.

### [Third Embodiment]

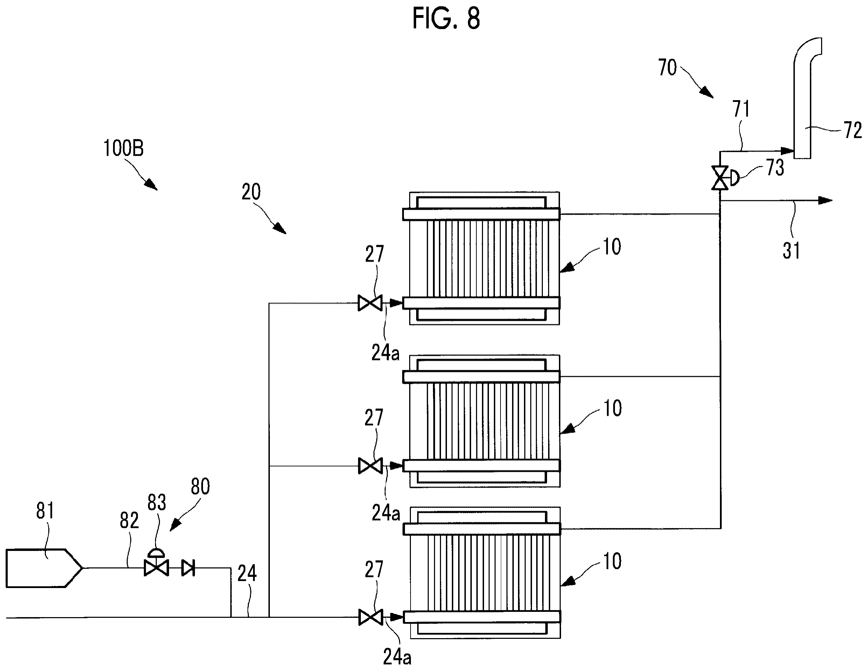

Next, an electrolysis system 100B according to a third embodiment of the present disclosure will be described with reference to the drawings. The present embodiment is a modification example of the first embodiment, and is the same as the first embodiment except for a case described below. Therefore, description thereof will be omitted below. FIG. 8 is a schematic configuration diagram showing the electrolysis system 100B according to the third embodiment of the present disclosure.

The electrolysis system 100B shown in FIG. 8 is different from the electrolysis system 100 of the first embodiment in that a plurality of the electrolysis modules 10 are provided. In FIG. 8, other configurations except for the air supply system 20, the exhaust air release system 70, and the air injection system 80 in the electrolysis system 100 shown in FIG. 1 are omitted in the drawing. As shown in FIG. 8, in the electrolysis system 100B, the air is supplied from the second air supply pipe 24 to each of the plurality of electrolysis modules 10. In addition, the exhaust air discharged from the plurality of electrolysis modules 10 is supplied to the first exhaust air pipe 31 of the oxygen recovery system 30.

As shown in FIG. 8, a flow rate adjusting device 27 is disposed in a branch pipe 24a that branches from the second air supply pipe 24 to each of the plurality of electrolysis modules 10. A plurality of the flow rate adjusting devices 27 are devices that adjust the flow rate of the air guided from the second air supply pipe 24 to the branch pipe 24a such that the air supply system 20 supplies the air having substantially the same flow rate per unit time to each of the plurality of electrolysis modules 10. The flow rate adjusting device 27 may be a flow rate adjusting orifice or a flow rate adjusting valve.

According to the electrolysis system 100B of the present embodiment, the air having substantially the same flow rate per unit time is supplied from the air supply system 20 to each of the plurality of electrolysis modules 10. Therefore, when the electrolysis system 100 is emergently stopped due to a power failure or the like, it is possible to suppress variations in a time required for lowering the pressure and the temperature inside the electrolysis module 10 between the respective electrolysis modules 10.

The electrolysis system and the operating method for the electrolysis system which are described in each of the embodiments described above are understood as follows, for example.

According to a first aspect of the present disclosure, there is provided the electrolysis system including the electrolysis module (11) that includes the oxygen electrode and the hydrogen electrode, and that electrolyzes the water vapor supplied to the hydrogen electrode to generate the hydrogen in the hydrogen electrode and to generate the oxygen in the oxygen electrode, the water vapor supply system (40) that supplies the water vapor to the hydrogen electrode, the hydrogen recovery system (50) that recovers the hydrogen mixed gas containing the water vapor supplied to the hydrogen electrode and the hydrogen generated in the hydrogen electrode, the air supply system (20) that supplies the air to the oxygen electrode, the oxygen recovery system (30) that recovers the oxygen mixed gas containing the air supplied to the oxygen electrode and the oxygen generated in the oxygen electrode, the first release system (60) that releases the hydrogen mixed gas from the hydrogen recovery system to the atmosphere, the second release system (70) that releases the oxygen mixed gas from the oxygen recovery system to the atmosphere, the first release valve (63) disposed in the first release system, the second release valve (73) disposed in the second release system, and the control unit (90) that controls the opening degrees of the first release valve and the second release valve to be adjustable when the electrolysis module is stopped.

According to the electrolysis system of the first aspect of the present disclosure, the first release system is connected to the water vapor recovery system that recovers the hydrogen mixed gas containing the hydrogen generated in the hydrogen electrode, and the second release system is connected to the oxygen recovery system that recovers the oxygen mixed gas containing the oxygen generated in the oxygen electrode. When the electrolysis module is stopped, the control unit controls the first release valve and the second release valve such that the opening degrees of the first release valve and the second release valve are adjustable. The hydrogen mixed gas is released from the first release valve, and the pressure and the temperature on the hydrogen electrode side of the electrolysis module are lowered. The oxygen mixed gas is released from the second release valve, and the pressure and the temperature on the oxygen electrode side of the electrolysis module are lowered.

In this case, although it is necessary to provide the emergency power supply facility required for operating the first release valve and the second release valve, it is not necessary to provide the emergency power supply facility required for operating a device that supplies the water vapor to the hydrogen electrode from the water vapor supply system and that supplies the air to the oxygen electrode from the air supply system. Therefore, according to the electrolysis system in the first aspect of the present disclosure, the pressure inside the electrolysis module can be lowered to the atmospheric pressure, and the temperature inside the electrolysis module can be appropriately lowered without deteriorating facility economic efficiency, when the power supply is cut off due to a power failure or the like.

In the electrolysis system according to a second aspect of the present disclosure, the first aspect further includes the following configuration. That is, the hydrogen recovery system includes the differential pressure measurement unit (54) that measures the pressure difference between the first pressure of the hydrogen mixed gas of the hydrogen recovery system and the second pressure of the oxygen mixed gas of the oxygen recovery system, and the control unit controls the first opening degree of the first release valve and the second opening degree of the second release valve such that the pressure difference measured by the differential pressure measurement unit falls within a predetermined range when the electrolysis module is stopped.

According to the electrolysis system in the second aspect of the present disclosure, the control unit controls the first opening degree of the first release valve and the second opening degree of the second release valve such that the pressure difference between the first pressure of the hydrogen mixed gas and the second pressure of the oxygen mixed gas which are measured by the differential pressure measurement unit falls within the predetermined range. Since the pressure difference between the first pressure of the hydrogen mixed gas and the second pressure of the oxygen mixed gas falls within the predetermined range, it is possible to appropriately prevent a possibility that the pressure difference exceeds the predetermined range to cause damage to the electrolysis module.

In the electrolysis system according to a third aspect of the present disclosure, the first aspect or the second aspect further includes the following configuration. That is, the electrolysis cell system includes the plurality of the electrolysis modules, and the air supply system includes the flow rate adjusting device that supplies the air having substantially the same flow rate per unit time to each of the plurality of electrolysis modules.

According to the electrolysis system of the third aspect of the present disclosure, the air having substantially the same flow rate per unit time is supplied from the air supply system to each of the plurality of electrolysis modules. Therefore, when the electrolysis system is emergently stopped due to a power failure or the like, it is possible to suppress variations in a time required for lowering the pressure and the temperature inside the electrolysis module between the respective electrolysis modules.

In the electrolysis system according to a fourth aspect of the present disclosure, any one of the first aspect to the third aspect further includes the following configuration. That is, the electrolysis cell system further includes the air injection system (80) connected to the air supply system and guiding the air in the atmosphere which is injected from the injection unit (81) to the air supply system. The air injection system (80) is disposed below the electrolysis module (10), and the exhaust air release unit (72) in which the second release system (70) connected to the first exhaust air pipe (31) releases the oxygen mixed gas to the atmosphere is disposed above the electrolysis module (10).

According to the electrolysis system of the fourth aspect of the present disclosure, after the internal pressure is lowered to the vicinity of the atmospheric pressure, the second release valve is set to the open state, and the air inflow cutoff valve and the air inflow flow rate adjusting valve are set to the open state. In this manner, the natural ventilation of the air to be injected from the injection unit to the air injection system is generated. Through the natural ventilation, the air injected from the injection unit into the air injection system is supplied from the air supply unit disposed above the injection unit to the electrolysis module. The oxygen mixed gas containing the air staying inside the electrolysis module is purged out to the electrolysis module, and is further discharged to the atmosphere from the exhaust air release unit disposed above the electrolysis module. Since the air injected from the injection unit is supplied and discharged to the electrolysis module through the natural ventilation, the high-temperature air staying inside the electrolysis module can be quickly discharged without using power for supplying the air, and a time required for lowering the temperature of the electrolysis module can be shortened. In addition, the natural ventilation is promoted by adopting a high ventilation method for the oxygen release unit,, and the electrolysis module can be more effectively cooled.

In the electrolysis system according to a fifth aspect of the present disclosure, the fourth aspect further includes the following configuration. That is, in response to a fact that the pressure of the oxygen mixed gas of the oxygen recovery system reaches the vicinity of the atmospheric pressure, the control unit operates the air injection flow rate adjusting valve (83), the air injection cutoff valve, and the second release valve (73) such that the air injected by the natural ventilation is releasable to the atmosphere from the second release system via the oxygen recovery system after being circulated inside the electrolysis module from the air injection system.

In the electrolysis system according to a sixth aspect of the present disclosure, the fourth aspect further includes the following configuration. That is, the air injection system includes the low pressure raising blower (84) having lower power consumption (for example, approximately 50 kPa) than the compressor, which is disposed in the air injection system, and the power supply unit (95) that supplies the power to the blower.

According to the electrolysis system of the sixth aspect of the present disclosure, the blower is operated by supplying the power to the blower from the power supply unit. In this manner, even when a sufficient flow rate cannot be obtained by the natural ventilation, the temperature inside the electrolysis module can be reliably lowered by compensating for the insufficient air.

In the electrolysis system according to a seventh aspect of the present disclosure, the sixth aspect further includes the following configuration. That is, in response to a fact that the pressure of the oxygen mixed gas of the oxygen recovery system reaches the vicinity of the atmospheric pressure, the control unit activates the blower to supply the air from the air injection system to the air supply system.

According to the electrolysis system of the seventh aspect of the present disclosure, in response to a fact that the second pressure reaches the vicinity of the atmospheric pressure, the air is forcibly supplied from the air injection system to the air supply system by activating the low pressure raising blower (for example, approximately 50 kPa). In this manner, the temperature inside the electrolysis module can be reliably reduced with less power than that of the compressor.

According to an eighth aspect of the present disclosure, there is provided the control method for the electrolysis system including the electrolysis module that includes the oxygen electrode and the hydrogen electrode, and that electrolyzes the water vapor supplied to the hydrogen electrode to generate the hydrogen in the hydrogen electrode and to generate the oxygen in the oxygen electrode, the water vapor supply system that supplies the water vapor to the hydrogen electrode, the hydrogen recovery system that recovers the hydrogen mixed gas containing the water vapor supplied to the hydrogen electrode and the hydrogen generated in the hydrogen electrode, the air supply system that supplies the air to the oxygen electrode, the oxygen recovery system that recovers the oxygen mixed gas containing the air supplied to the oxygen electrode and the oxygen generated in the oxygen electrode, the first release system that releases the hydrogen mixed gas from the hydrogen recovery system to an atmosphere, the second release system that releases the oxygen mixed gas from the oxygen recovery system to the atmosphere, the first release valve disposed in the first release system, and the second release valve disposed in the second release system. The control method includes the release steps (S103 to S108) of controlling the opening degrees of the first release valve and the second release valve to be adjustable when an electrolysis module is stopped.

According to the control method for the electrolysis system in the eighth aspect of the present disclosure, the first release system is connected to the water vapor recovery system that recovers the hydrogen mixed gas containing the hydrogen generated in the hydrogen electrode, and the second release system is connected to the oxygen recovery system that recovers the oxygen mixed gas containing the oxygen generated in the oxygen electrode. When the electrolysis module is stopped, in the release step, the first release valve and the second release valve are controlled such that the opening degrees of the first release valve and the second release valve are adjustable. The hydrogen mixed gas is released from the first release valve, and the pressure and the temperature on the hydrogen electrode side of the electrolysis module are lowered. The oxygen mixed gas is released from the second release valve, and the pressure and the temperature on the oxygen electrode side of the electrolysis module are lowered.

In this case, although it is necessary to provide the emergency power supply facility required for operating the first release valve and the second release valve, it is not necessary to provide the emergency power supply facility required for operating a device that supplies the water vapor to the hydrogen electrode from the water vapor supply system and that supplies the air to the oxygen electrode from the air supply system. Therefore, according to the control method for the electrolysis system in the seventh aspect of the present disclosure, the pressure inside the electrolysis module can be lowered to the atmospheric pressure, and the temperature inside the electrolysis module can be appropriately lowered without deteriorating facility economic efficiency, when the power supply is cut off due to a power failure or the like.

In the control method for the electrolysis system according to the ninth aspect of the present disclosure, the eighth aspect further includes the following configuration. That is, the method further includes the differential pressure measurement step (S109) of measuring the pressure difference between the first pressure of the hydrogen mixed gas of the hydrogen recovery system and the second pressure of the oxygen mixed gas of the oxygen recovery system. In the release step, the first opening degree of the first release valve and the second opening degree of the second release valve are controlled such that the pressure difference measured in the differential pressure measurement step falls within a predetermined range.

According to the control method for the electrolysis system in the ninth aspect of the present disclosure, when the electrolysis module is stopped, the first opening degree of the first release valve and the second opening degree of the second release valve are controlled in the release step such that the pressure difference between the first pressure of the hydrogen mixed gas and the second pressure of the oxygen mixed gas which are measured in the differential pressure measurement step falls within the predetermined range. Since the pressure difference between the first pressure of the hydrogen mixed gas and the second pressure of the oxygen mixed gas falls within the predetermined range, it is possible to appropriately prevent a possibility that the pressure difference exceeds the predetermined range to cause damage to the electrolysis module.

In the control method for an electrolysis system according to the tenth aspect of the present disclosure, the eighth or ninth aspect further includes the following configuration. That is, the electrolysis system includes the plurality of electrolysis modules, and the air supply system supplies the air having substantially the same flow rate per unit time to each of the plurality of electrolysis modules.

According to the control method for the electrolysis system in the tenth aspect of the present disclosure, the air having substantially the same flow rate per unit time is supplied to each of the plurality of electrolysis modules from the air supply system. Therefore, when the electrolysis system is emergently stopped due to a power failure or the like, it is possible to suppress variations in a time required for lowering the pressure and the temperature inside the electrolysis module between the respective electrolysis modules.

In the control method for the electrolysis system according to the eleventh aspect of the present disclosure, the eighth or ninth aspect further includes the following configuration. That is, the electrolysis cell system further includes the air injection system (80) connected to the air supply system and guiding the air in the atmosphere which is injected from the injection unit (81) to the air supply system. The air injection system (80) is disposed below the electrolysis module (10), and the exhaust air release unit (72) in which the second release system (70) connected to the first exhaust air pipe (31) releases the oxygen mixed gas to the atmosphere is disposed above the electrolysis module (10).

According to the control method for the electrolysis system in the eleventh aspect of the present disclosure, the second release valve is set to the open state, and the air injection cutoff valve (not shown) and the air injection flow rate adjusting valve (83) are set to the open state after the internal pressure is lowered to the vicinity of the atmospheric pressure. In this manner, the natural ventilation of the air is generated in the air injection system from the injection unit. Through the natural ventilation, the air injected from the injection unit into the air injection system is supplied from the air supply unit disposed above the injection unit to the electrolysis module. The oxygen mixed gas containing the air staying inside the electrolysis module is purged out to the electrolysis module, and is further discharged to the atmosphere from the exhaust air release unit disposed above the electrolysis module. Since the air injected from the injection unit is supplied and discharged to the electrolysis module through the natural ventilation, the temperature inside the electrolysis module can be appropriately lowered without using power for supplying the air.

In the control method for the electrolysis system according to a twelfth aspect of the present disclosure, the eleventh aspect further includes the following configuration. That is, in the release step, in response to a fact that the pressure of the oxygen mixed gas of the oxygen recovery system reaches the vicinity of the atmospheric pressure, the air injection flow rate adjusting valve (83), the air injection cutoff valve, and the second release valve (73) are operated such that the air injected by the natural ventilation is releasable to the atmosphere from the second release system via the oxygen recovery system after being circulated inside the electrolysis module from the air injection system.

In the control method for the electrolysis system according to a thirteenth aspect of the present disclosure, the eleventh aspect further includes the following configuration. That is, the air injection system includes the low pressure raising blower disposed in the air injection system, and the power supply unit that supplies the power to the blower.

According to the control method for the electrolysis system in the thirteenth aspect of the present disclosure, the blower is operated by supplying the power to the blower from the power supply unit. In this manner, the temperature inside the electrolysis module can be reliably lowered by compensating for the air insufficient in natural ventilation.

In the control method for the electrolysis system according to a fourteenth aspect of the present disclosure, the thirteenth aspect further includes the following configuration. That is, the air injection method further includes the blower activation step of activating the blower to supply the air from the air injection system to the air supply system in response to a fact that the second pressure reaches the vicinity of the atmospheric pressure.

According to the control method for the electrolysis system in the fourteenth aspect of the present disclosure, in response to a fact that the pressure of the oxygen mixed gas of the oxygen recovery system reaches the vicinity of the atmospheric pressure, the low pressure raising blower is activated to forcibly supply the air from the air injection system to the air supply system. In this manner, even when a sufficient flow rate cannot be obtained by the natural ventilation, the temperature inside the electrolysis module can be reliably lowered with less power by compensating for the insufficient air.

### Reference Signs List

10 electrolysis module
20: air supply system
21: air supply unit
22: compressor
23: first air supply pipe
24: second air supply pipe
25: supply air flow rate adjusting valve
25a: flow rate measurement unit
26: air supply unit
27: flow rate adjusting device
30: oxygen recovery system
31: first exhaust air pipe
32: turbine
33: second exhaust air pipe
34: exhaust air discharge unit
35: exhaust air cooler
37: pressure measurement unit
38: oxygen supply unit
40: water vapor supply system
41: water vapor supply unit
42: Superheater
43: water vapor supply pipe
44: water vapor flow rate adjusting valve
44a: flow rate measurement unit
50: hydrogen recovery system
51: hydrogen-enriched water vapor pipe
52: hydrogen-enriched water vapor recovery unit
53: hydrogen-enriched water vapor flow rate adjusting valve
54: differential pressure measurement unit
60: hydrogen-enriched water vapor release system (first release system)
61: release pipe
62: hydrogen-enriched water vapor release unit
63: hydrogen-enriched water vapor release valve (first release valve)
70: exhaust air release system (second release system)
71: release pipe
72: exhaust air release unit
73: exhaust air release valve (second release valve)
80: air injection system
81: injection unit
82: air injection pipe
83: air injection flow rate adjusting valve
84: blower
90: emergency power supply facility (power supply unit)
95: control device
100, 100A, 100B electrolysis system
109: hydrogen electrode
113: oxygen electrode

## Claims

1. An electrolysis system comprising:
an electrolysis module that includes an oxygen electrode and a hydrogen electrode, and that electrolyzes water vapor supplied to the hydrogen electrode to generate hydrogen in the hydrogen electrode and to generate oxygen in the oxygen electrode;
a water vapor supply system that supplies the water vapor to the hydrogen electrode;
a hydrogen recovery system that recovers a hydrogen mixed gas containing the water vapor supplied to the hydrogen electrode and the hydrogen generated in the hydrogen electrode;
an air supply system that supplies air to the oxygen electrode;
an oxygen recovery system that recovers an oxygen mixed gas containing the air supplied to the oxygen electrode and the oxygen generated in the oxygen electrode;
a first release system that releases the hydrogen mixed gas from the hydrogen recovery system to an atmosphere;
a second release system that releases the oxygen mixed gas from the oxygen recovery system to the atmosphere;
a first release valve disposed in the first release system;
a second release valve disposed in the second release system; and
a control unit that controls opening degrees of the first release valve and the second release valve to be adjustable when the electrolysis module is stopped.

2. The electrolysis system according to Claim 1,
wherein the hydrogen recovery system includes a differential pressure measurement unit that measures a pressure difference between a first pressure of the hydrogen mixed gas of the hydrogen recovery system and a second pressure of the oxygen mixed gas of the oxygen recovery system, and
the control unit controls a first opening degree of the first release valve and a second opening degree of the second release valve such that the pressure difference measured by the differential pressure measurement unit falls within a predetermined range when the electrolysis module is stopped.

3. The electrolysis system according to Claim 1 or 2, further comprising:
a plurality of the electrolysis modules,
wherein the air supply system includes a flow rate adjusting device that supplies the air having substantially the same flow rate per unit time to each of the plurality of the electrolysis modules.

4. The electrolysis system according to Claim 1 or 2, further comprising:
an air injection system connected to the air supply system and guiding the air in the atmosphere which is injected from an injection unit to the air supply system,
wherein the air injection system is disposed below the electrolysis module, and
an exhaust air release unit in which the second release system connected to the oxygen recovery system releases the oxygen mixed gas to the atmosphere is disposed above the electrolysis module.

5. The electrolysis system according to Claim 4,
wherein in response to a fact that the pressure of the oxygen mixed gas of the oxygen recovery system reaches a vicinity of an atmospheric pressure, the control unit operates an air injection flow rate adjusting valve, an air injection cutoff valve, and the second release valve such that the air injected by natural ventilation is releasable to the atmosphere from the second release system via the oxygen recovery system after being circulated inside the electrolysis module from the air injection system.

6. The electrolysis system according to Claim 4, further comprising:
a blower disposed in the air injection system; and
a power supply unit that supplies power to the blower.

7. The electrolysis system according to Claim 6,
wherein in response to a fact that the pressure of the oxygen mixed gas of the oxygen recovery system reaches a vicinity of an atmospheric pressure, the control unit activates the blower that supplies the air from the air injection system to the air supply system.

8. A control method for an electrolysis system,
the electrolysis system including
an electrolysis module that includes an oxygen electrode and a hydrogen electrode, and that electrolyzes water vapor supplied to the hydrogen electrode to generate hydrogen in the hydrogen electrode and to generate oxygen in the oxygen electrode,
a water vapor supply system that supplies the water vapor to the hydrogen electrode,
a hydrogen recovery system that recovers a hydrogen mixed gas containing the water vapor supplied to the hydrogen electrode and the hydrogen generated in the hydrogen electrode,
an air supply system that supplies air to the oxygen electrode,
an oxygen recovery system that recovers an oxygen mixed gas containing the air supplied to the oxygen electrode and the oxygen generated in the oxygen electrode,
a first release system that releases the hydrogen mixed gas from the hydrogen recovery system to an atmosphere,
a second release system that releases the oxygen mixed gas from the oxygen recovery system to the atmosphere,
a first release valve disposed in the first release system, and
a second release valve disposed in the second release system,
the control method comprising:
a release step of controlling opening degrees of the first release valve and the second release valve to be adjustable when the electrolysis module is stopped.

9. The control method for an electrolysis system according to Claim 8, further comprising:
a differential pressure measurement step of measuring a pressure difference between a first pressure of the hydrogen mixed gas of the hydrogen recovery system and a second pressure of the oxygen mixed gas of the oxygen recovery system,
wherein when the electrolysis module is stopped, in the release step, a first opening degree of the first release valve and a second opening degree of the second release valve are controlled such that the pressure difference measured in the differential pressure measurement step falls within a predetermined range.

10. The control method for an electrolysis system according to Claim 8 or 9,
wherein the electrolysis system includes a plurality of the electrolysis modules, and
the air supply system supplies the air having substantially the same flow rate per unit time to each of the plurality of electrolysis modules.

11. The control method for an electrolysis system according to Claim 8 or 9,
wherein the electrolysis system includes an air injection system connected to the air supply system and guiding the air in the atmosphere which is injected from the injection unit to the air supply system,
the air injection system is disposed below the electrolysis module, and
an exhaust air release unit in which the second release system connected to the oxygen recovery system releases the oxygen mixed gas to the atmosphere is disposed above the electrolysis module.

12. The control method for an electrolysis system according to Claim 11,
wherein in the release step, in response to a fact that the pressure of the oxygen mixed gas of the oxygen recovery system reaches a vicinity of an atmospheric pressure, an air injection flow rate adjusting valve, an air injection cutoff valve, and the second release valve are operated such that the air injected by natural ventilation is releasable to the atmosphere from the second release system via the oxygen recovery system after being circulated inside the electrolysis module from the air injection system.

13. The control method for an electrolysis system according to Claim 11,
wherein the electrolysis system includes
a blower disposed in the air injection system, and
a power supply unit that supplies power to the blower.

14. The control method for an electrolysis system according to Claim 13, further comprising:
a blower activation step of activating the blower to supply the air from the air injection system to the air supply system, in response to a fact that the pressure of the oxygen mixed gas of the oxygen recovery system reaches a vicinity of an atmospheric pressure.
